Europäisches Patentamt

European Patent Office

Office européen des brevets

(19)

(11) **EP 0 792 071 B1**

(12) **FASCICULE DE BREVET EUROPEEN**

(45) Date de publication et mention
de la délivrance du brevet:
**09.01.2002 Bulletin 2002/02**

(51) Int Cl.⁷: **H04N 7/50**

(21) Numéro de dépôt: **97200382.6**

(22) Date de dépôt: **13.02.1997**

(54) **Dispositif de décodage de signaux de type MPEG2**

MPEG2-Dekodierer

MPEG2 decoder

(84) Etats contractants désignés:
**DE FR GB**

(30) Priorité: **21.02.1996 FR 9602149**

(43) Date de publication de la demande:
**27.08.1997 Bulletin 1997/35**

(73) Titulaire: **Koninklijke Philips Electronics N.V.
5621 BA Eindhoven (NL)**

(72) Inventeur: **Bru, Bernard
75008 Paris (FR)**

(74) Mandataire: **Landousy, Christian
Société Civile S.P.I.D. 156, Boulevard
Haussmann
75008 Paris (FR)**

(56) Documents cités:
**EP-A- 0 591 695        EP-A- 0 710 029
US-A- 5 036 493**

- **IEEE SPECTRUM, vol. 29, no. 10, Octobre 1992,
  NEW YORK US, pages 43-49, XP000315470
  JONES ET AL.: "A new era of fast dynamic
  RAMs"**
- **AT & T TECHNICAL JOURNAL, vol. 72, no. 1,
  Janvier 1993, NEW YORK US, pages 50-66,
  XP000367735 ACKLAND ET AL.: "A
  Video-Codec Chip Set for Multimedia
  Applications"**

## Description

La présente invention concerne un dispositif de décodage de signaux numériques codés correspondant à n types de données de nature distincte et multiplexés conformément à la norme dite MPEG2-system, comprenant notamment un étage d'entrée pour la réception et le stockage desdites données et un bus de communication avec une mémoire externe.

Le domaine d'utilisation de cette invention est constitué par les applications dites "multimédia", dans lesquelles le décodeur est susceptible de recevoir des données appartenant à des contextes différents (vidéo, audio, graphique, etc...), mais reçues par le même support de transmission. Ces données ont, au préalable, été multiplexées conformément à la norme MPEG2-system (décrite dans le document ISO/IEC JTC 1/SC 29 diffusé le 27 avril 1995 par l'Organisation Internationale de Standardisation ISO et intitulé "Revised text for ITU-T Recommendation H.222.O/ISO/IEC 13818-1, Information Technology - Generic coding of moving pictures and associated audio information : Systems"). L'invention a trait, plus particulièrement, à la manière de recevoir ces données multiplexées et de les démultiplexer avant de les envoyer sur un support de stockage, pour un traitement ultérieur.

La communication "VLSI Implementation of MPEG decoders", T. Fautier, ISCAS'94, Londres, mai 1994, chapitre 3.22, pp.164-172, décrit une architecture de décodeur MPEG destinée à recevoir des données vidéo comprimées et comprenant, en entrée, un étage d'écriture en mémoire composé de deux unités de stockage en flip-flop. Pendant qu'une de ces unités reçoit le flot des données comprimées et est en cours de remplissage, l'autre réémet les données précédemment reçues puis, une fois vide, reçoit à son tour le flot des données d'entrée, pendant que la première réémet, et ainsi de suite. Lorsqu'un tel décodeur doit pouvoir recevoir des données appartenant à des contextes différents, il doit, de ce fait, comprendre autant de paires d'unités de stockage en flip-flop que de contextes différents (ou de types différents de données à gérer).

Le but de l'invention est de proposer un dispositif de décodage de type MPEG comprenant un étage de réception de données de structure plus simple, permettant notamment un gain en surface et en nombre de mémoires, et donc une réduction notable du coût du produit.

A cet effet, l'invention concerne un dispositif tel que défini dans le préambule de la description et qui comprend en série les éléments suivants :

(1) un sous-ensemble de stockage comprenant n registres correspondant aux n types de données et recevant en parallèle le flot desdits signaux numériques codés et multiplexés ;

(2) une première mémoire-tampon pour le stockage temporaire du contenu d'un des n registres dès que celui-ci est plein et d'une information relative au type de données contenu dans ledit registre ;

(3) une deuxième mémoire-tampon, comprenant n blocs de mémorisation en parallèle, pour le stockage, par type de donnée, du contenu de ladite première mémoire-tampon ; un bloc de synchronisation étant prévu pour effectuer les demandes d'accès à la mémoire externe du dispositif de décodage.

Avec la structure ainsi proposée, le nombre de contextes, c'est-à-dire de types de données, peut varier dans le temps de manière beaucoup plus souple que dans le cas précédent. En effet, le nombre d'unités de stockage est de deux, quel que soit ce nombre de types de données. D'autre part, la logique de contrôle du dispositif est simple : il n'y a pas de gestion de file d'attente, le premier bloc rempli donne aussitôt lieu à une émission. En définitive, la réduction de taille mémoire et de complexité du dispositif permet une notable réduction des coûts de fabrication.

Les particularités de l'invention apparaîtront maintenant de façon plus détaillée dans la description qui suit et en se référant aux figures, données à titre d'exemple et dans lesquelles :

- la figure 1 montre le principe général de réception et de stockage d'un flux de signaux de type MPEG2 system ;
- la figure 2 montre le principe de fonctionnement d'un décodeur MPEG vidéo et l'architecture générale d'un tel décodeur ;
- la figure 3 montre la structure de réception que devrait avoir l'étage d'entrée d'un décodeur tel que celui de la figure 2 pour être en mesure de recevoir des types de données différents ;
- la figure 4 montre un exemple de réalisation de l'étage d'entrée du dispositif de décodage selon l'invention.

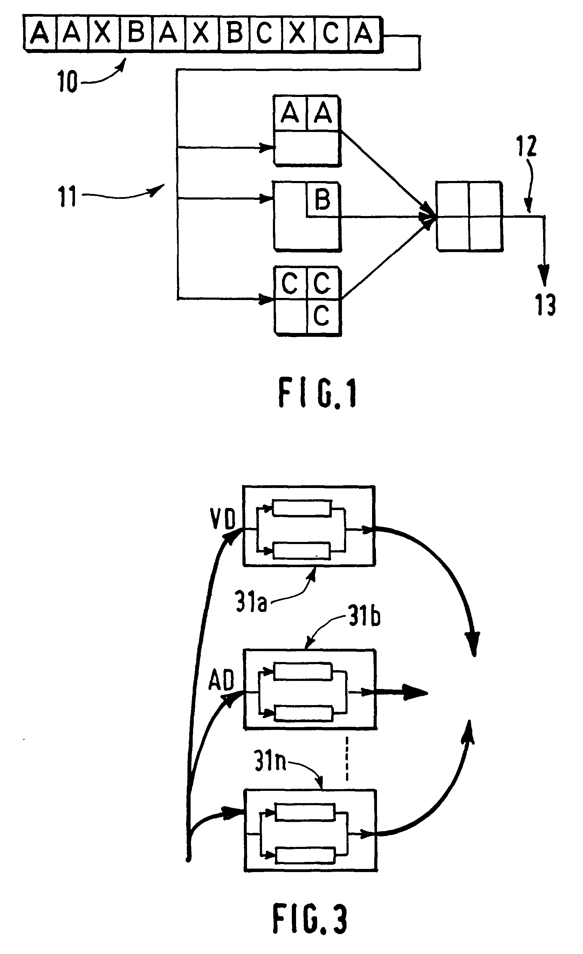

La figure 1 illustre le principe de fonctionnement d'un décodeur tel que celui décrit dans la communication citée plus haut, dans le cas où il reçoit des données hétérogènes ayant des débits distincts. Un canal 10 assure la transmission des données, de type A ou B ou C par exemple (les zones X correspondent à des périodes d'absence de transmission de données ou à des données non utiles dans le cas de l'application ici décrite). Un démultiplexeur 11 assure alors la constitution de paquets de données de même type (il est en effet plus économique d'envoyer les données par paquets de type identique, mais d'une taille qui peut être imposée extérieurement par le système de transmission), ce qui permet, dès qu'un paquet en cours de création a la taille requise, d'émettre (opération 12) chaque paquet de données de même type vers une unité de stockage 13.

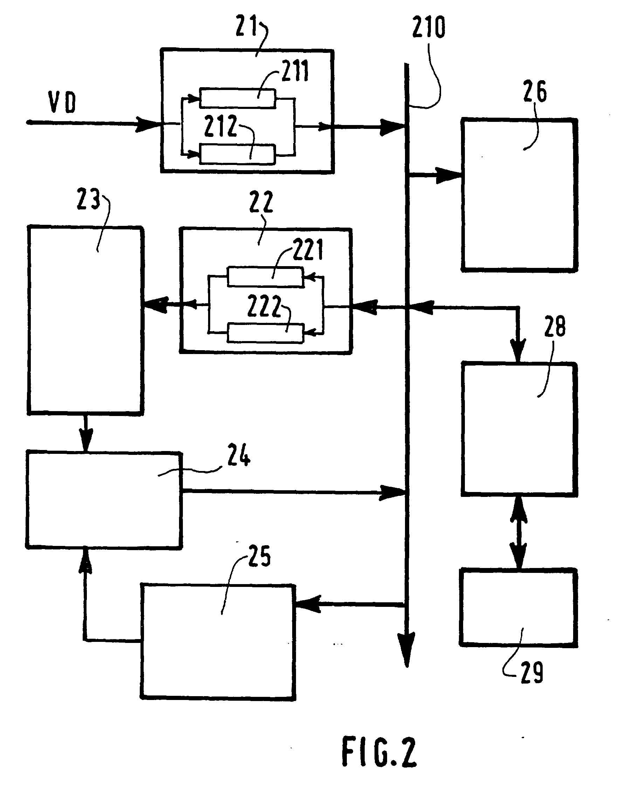

La figure 2 montre de façon plus détaillée l'architecture du décodeur MPEG vidéo décrit dans ladite communication. Ce décodeur comprend tout d'abord, pour recevoir le flot des données vidéo VD qui ont été préalablement comprimées et transmises, un étage 21 d'écriture en mémoire comprenant deux mémoires 211 et 212 montées en flip-flop comme indiqué ci-dessus. L'étage 21 envoie les données qu'il réémet vers un bus 210 de communication avec une mémoire externe 29 (la mémoire DRAM mentionnée dans le document), par l'intermédiaire d'un arbitreur 28 gérant toutes les demandes d'accès à cette mémoire externe. Les données ainsi mémorisées sont alors transférées vers un étage 23 de décodage par l'intermédiaire d'un étage de lecture 22 comprenant lui aussi deux mémoires 221 et 222 montées en flip-flop. La sortie de l'étage de décodage 23 est envoyée sur une première entrée d'un étage d'interpolation 24 qui reçoit également la sortie d'un étage de compensation de mouvement 25. Les données décodées peuvent alors être envoyées vers un étage d'affichage vidéo 26.

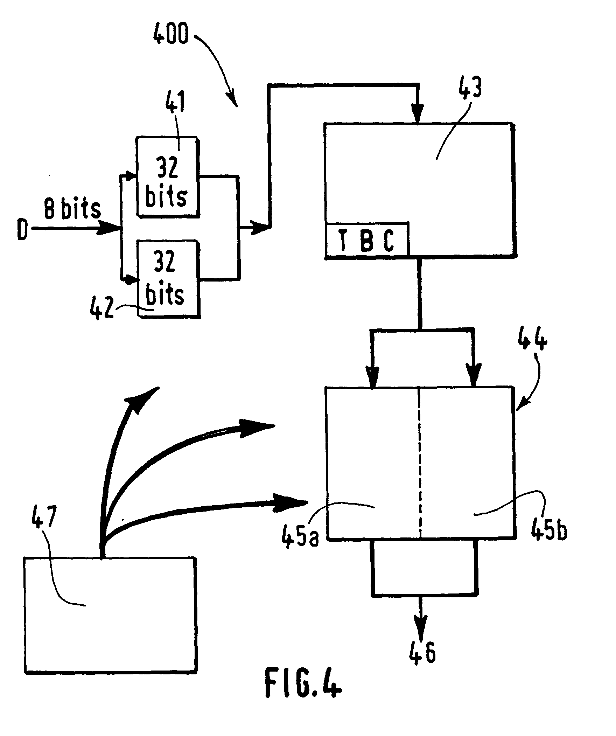

Dans cette architecture décrivant les différents étages du décodeur du document cité tels qu'ils sont réalisés, l'invention décrite ci-après se situe dans l'interface d'entrée que constitue l'étage 21 d'écriture en mémoire. La figure 3 montre la structure que devrait avoir, en l'absence de l'invention, l'interface d'entrée du dispositif de décodage pour pouvoir recevoir des types de données différents, à savoir être composée d'autant d'étages d'écriture 31a, 31b,..., 31n que de types de données, ces étages étant identiques à l'étage 21 de la figure 2 (dans le cas présent : données vidéo VD, données audio AD, etc...). La figure 4 montre au contraire, sous la référence 400, un exemple de réalisation d'étage d'entrée conforme à la présente invention, dans le cas où sont reçus seulement deux types de données différents (des données vidéo et audio notamment, ce qui constitue actuellement encore un cas fréquent : voir par exemple la demande de brevet WO 95/32578). L'invention n'en est pas moins applicable à la réception d'un nombre quelconque de données de types différents.

L'étage d'entrée 400 comprend plus précisément, pour recevoir les données d'entrée D comprimées et multiplexées, présentes ici sur un bus d'entrée 8 bits, un registre vidéo 41 et un registre audio 42 en parallèle (ici, des registres 32 bits). La sortie commune de ces deux registres est envoyée vers une première mémoire 43, par exemple de type SRAM. La première mémoire 43 est suivie d'une deuxième mémoire 44, également de type SRAM, comprenant un bloc mémoire vidéo 45a et un bloc mémoire audio 45b. La sortie de cette mémoire 44 est reliée à une troisième mémoire 46 qui est la mémoire externe, de type DRAM, présente dans un décodeur de type MPEG.

Le fonctionnement de cet étage d'entrée 400 est le suivant. Le dispositif de décodage reçoit en entrée des données D, par exemple de type vidéo et de type audio (la connaissance et la détection du type des données reçues ne sont pas du ressort de l'invention et ne sont donc pas décrites). Ces données sont d'abord stockées dans le registre correspondant 41 ou 42 (vidéo ou audio). Dès que ce registre est plein, son contenu est transféré dans la première mémoire SRAM 43 (avec un bus 8 bits, si on reçoit une donnée tous les cycles d'horloge, le contenu du registre 32 bits plein est totalement écrit dans cette mémoire tous les quatre cycles). Les données du registre concerné sont écrites dans les 32 bits de poids le plus faible de chaque mot dans la mémoire 43, et deux bits de poids fort sont réservés pour constituer un code à deux bits TBC qui sert à identifier le type de donnée considéré.

La mémoire 43 sert de tampon pour la deuxième mémoire SRAM 44 lorsque cette dernière est indisponible du fait d'une demande d'accès à la troisième mémoire DRAM 46. Lorsque cette deuxième mémoire SRAM 44 est au contraire disponible, elle reçoit les données en provenance de la première mémoire SRAM 43 et les stocke selon leur type (connu d'après la valeur des deux bits du code TBC) dans l'un des deux blocs 45a ou 45b. Dès qu'un bloc (vidéo ou audio) est plein, un bloc de synchronisation 47 effectue auprès de l'arbitreur (non représenté) une demande d'accès à cette troisième mémoire.

Les avantages de la solution proposée peuvent être résumés de la façon suivante :

(1) le dispositif comprend seulement deux unités de stockage, quel que soit le nombre de types de données à gérer, et un seul bloc de contrôle (au lieu de n dans le cas de n unités de stockage en flip-flop), ce qui réduit les causes d'erreur ;
(2) par rapport à un décodeur MPEG tel que réalisé jusqu'à présent, on obtient un gain en surface et en nombre de SRAMs utilisées :

(a) dans le cas des SRAMs en flip-flop : le coût en lignes de stockage est de 2 x n x m, avec utilisation de 2n mémoires SRAM, n étant le nombre de types de données et m le nombre de lignes de stockage par SRAM ;
(b) dans le cas des deux mémoires SRAM en série : le coût est de (n x m)+p, p étant le nombre de lignes de la première mémoire SRAM 43, ou plus précisément de m(n+1) si p = m, ce qui indique que le gain de cette solution tend vers 2 pour n grand, par rapport à la solution antérieure.

Le dispositif de décodage ci-dessus décrit est conçu de manière à ce que la mémoire 43 soit toujours vide lorsque la mémoire 44 se remplit. A cet effet, les deux mémoires doivent pouvoir stocker au moins une donnée de taille double de celle reçue. Ainsi, il ne sera possible d'écrire qu'une donnée tous les deux cycles. Le cycle libre servira à la mémoire 44 pour relire la mémoire 43.

On peut comme exemple considérer le cas le plus défavorable. Dans la mémoire 44, 31 valeurs sont stockées en zone audio, et 32 valeurs en zone vidéo.

La zone vidéo étant pleine, une demande de stockage est faite à l'arbitreur pour stocker les données en mémoire 46. Le temps de réponse maximal est de 200 cycles d'horloge, le stockage lui-même nécessite 6 + 32 * 2 cycles = 70 cycles, soit au total 270 cycles. La donnée présente en mémoire 43 est une donnée audio, le bloc audio 45b en mémoire 44 sera donc plein. Dès le premier accès fait à la mémoire 43, une nouvelle demande de transfert vers la mémoire 46 est faite à l'arbitreur, et le coût est à nouveau de 270 cycles. La mémoire 43 va se remplir lorsque la mémoire 44 est en liaison avec la mémoire 46. Le débit maximum théorique auquel on peut recevoir les données est de 64* 4 = 256 octets (taille de la mémoire 43) en 540 cycles (temps maximum d'occupation de la mémoire 44). En conséquence, la présente réalisation ne peut supporter un débit maximum supérieur à 1 octet tous les 2.1 cycles. L'horloge a une fréquence de 40.5 MHz, et le débit maximal théorique est de 19.3 MO/sec., si plus de 256 octets sont envoyés consécutivement. Le débit moyen réel est, de fait, égal à 2 MO/sec au maximum, ce qui laisse une plage suffisamment grande pour que le débit puisse subir localement de grandes variations.

Bien entendu, la présente invention n'est pas limitée à l'exemple de réalisation décrit, à partir duquel des variantes peuvent être proposées. Par exemple, on a vu que le dispositif de décodage peut être prévu pour recevoir n types de données différents. L'étage d'entrée comprend alors n registres de stockage, dont chacun a la taille d'une unité élémentaire de stockage de la mémoire 46. La taille d'une unité de stockage de la mémoire 43 est celle d'un des registres, plus le nombre de bits nécessaires pour coder le type des données (code à deux bits TBC), selon la formule :

$$\text{taille du code en bits} = \text{int}(\log_2(n)+1 - 1/n)$$

La mémoire 44 est, elle, constituée de n blocs dont la taille est celle des registres. Cette taille des registres est initialement laissée au choix de l'utilisateur (32 bits, 48 bits, etc...)

## Revendications

**1.** Dispositif de décodage de signaux numériques codés correspondant à n types de données (vidéo, audio) de nature distincte et multiplexés conformément à la norme dite MPEG2-system, comprenant notamment un étage d'entrée (400) pour la réception et le stockage desdites données et un bus de communication (46) avec une mémoire externe, **caractérisé en ce que** ledit étage d'entrée (400) comprend en série les éléments suivants :

(1) un sous-ensemble de stockage comprenant n registres (41,42) correspondant aux n types de données et recevant en parallèle le flot desdits signaux numériques codés et multiplexés ;
(2) une première mémoire-tampon (43) pour le stockage temporaire du contenu d'un des n registres dès que celui-ci est plein et d'une information relative au type de données contenu dans ledit registre ;
(3) une deuxième mémoire-tampon, comprenant n blocs (45a,45b) de mémorisation en parallèle, pour le stockage, par type de donnée, du contenu de ladite première mémoire-tampon (43) ; un bloc de synchronisation étant prévu pour effectuer les demandes d'accès à la mémoire externe du dispositif de décodage dès qu'un bloc de mémorisation est plein.

**2.** Dispositif de décodage selon la revendication 1, **caractérisé en ce que** ledit sous-ensemble de stockage comprend deux registres (41,42) correspondant à des données vidéo et audio, et **en ce que** la deuxième mémoire-tampon (44) comprend deux blocs de mémorisation (45a,45b) en parallèle du contenu de la première mémoire-tampon (43).

## Patentansprüche

**1.** Dekodiervorrichtung digitaler Signale, entsprechend n (Bild, Ton) Datentypen unterschiedlicher Art kodiert und entsprechend der sogenannten MPEG2-Systemnorm multiplexiert, mit insbesondere einer Eingangsstufe (400) für den Erhalt und die Speicherung der besagten Daten und einem Kommunikationsbus (46) mit einem externen Speicher, **dadurch gekennzeichnet, daß** die besagte Eingangsstufe (400) in Serie folgende Elemente enthält:

(1) ein Unterspeichersystem mit n Registern (41, 42) entsprechend n Datentypen für den parallelen Erhalt des besagten digitalen kodierten und multiplexierten Signalflusses;
(2) einen ersten Pufferspeicher 43 für die Zwischenspeicherung des Inhalts eines der n Register, sobald dieses voll ist, sowie einer Information in bezug auf den in dem besagten Register enthaltenen Datentyp;
(3) einen zweiten Pufferspeicher mit n parallelen Blöcken (45a, 45b) für die Speicherung nach Datentyp des Inhalts des besagten ersten Pufferspeichers (43); ein Synchronisationsblock ist vorgesehen, um die Zugriffsanfragen an den externen Speicher der Dekodiervorrichtung zu richten, sobald ein Speicherblock voll ist.

**2.** Dekodiervorrichtung nach Anspruch 1, **dadurch gekennzeichnet, daß** das besagte Unterspeichersystem zwei Bild- und Tondaten entsprechende Register (41, 42) enthält, und daß der zweite Pufferspeicher (44) zwei parallele Speicherblöcke (45a, 45b) für den Inhalts des ersten Pufferspeichers (43) enthält.

**Claims**

1. A device for decoding encoded digital signals corresponding to n types of data (video, audio) of a distinct nature and multiplexed in conformity with the standard referred to as MPEG2 system, comprising particularly an input stage (400) for receiving and storing said data, and a communication bus (46) with an external memory, **characterized in that** said input stage (400) comprises, in series, the following elements:

   (1) a storage sub-assembly comprising n registers (41, 42) corresponding to n types of data and receiving, in parallel, the stream of said encoded and multiplexed digital signals;
   (2) a first buffer memory (43) for temporarily storing the contents of one of the n registers as soon as said register is full and for storing information relating to the type of data contained in said register;
   (3) a second buffer memory comprising n parallel-arranged memorizing blocks (45a, 45b) for storing, per type of data, the contents of said first buffer memory (43); a synchronizing clock being provided for effecting the requests for access to the external memory of the decoding device as soon as one memorizing block is full.

2. A decoding device as claimed in claim 1, **characterized in that** said storage sub-assembly comprises two registers (41, 42) corresponding to video and audio data, and **in that** the second buffer memory (44) comprises two parallel-arranged memorizing blocks (45a, 45b) for storing the contents of the first buffer memory (43).

FIG.1

FIG.3

FIG.2

FIG.4